# EUROPÄISCHE PATENTSCHRIFT

(11) **EP 0 887 907 B1**
(45) Veröffentlichungstag und Bekanntmachung des Hinweises auf die Patenterteilung: **09.03.2011**
(21) Anmeldenummer: 98110878.0
(22) Anmeldetag: 15.06.1998
(51) Int. Cl.: H02K 5/132, H02K 11/04, H02K 5/22

(54) **Tauchmotoreinheit**
Submersible motor unit
Unité moteur submersible

(30) Priorität: 26.06.1997 DE 19727202
(43) Veröffentlichungstag der Anmeldung: 30.12.1998
(73) Patentinhaber: GRUNDFOS A/S, DK-8850 Bjerringbro (DK)
(72) Erfinder: Jensen, Niels Due, 8850 Bjerringbro (DK); Mikkelsen, Steen, 8850 Bjerringbro (DK); Andersen, Preben, 8450 Hammel (DK)
(74) Vertreter: Vollmann, Heiko

(56) Entgegenhaltungen:
- DE-A- 4 120 665

## Beschreibung

Die Erfindung geht aus von einer Tauchmotoreinheit für eine Kreiselpumpe gemäß dem Oberbegriff des Patentanspruchs 1.

Eine derartige Einheit ist in der DE-C-38 20 003 beschrieben. Sie umfaßt ein gemeinsames Gehäuse, das aus einem einteiligen rohrförmigen Mantelteil mit einem daran befestigten Bodenteil besteht, einen elektrischen Antriebsmotor für die Kreiselpumpe und eine elektrische Steuerungseinrichtung zur Einstellung der Drehzahl und/oder des Drehmomentes des Antriebsmotors, wobei der Antriebsmotor und die Steuerungseinrichtung in dem gemeinsamen Gehäuse hintereinanderliegend angeordnet sind. Ein am pumpenseitigen Ende des Motors eingeführtes, innerhalb des gemeinsamen Gehäuses verlaufendes, geschirmtes Anschlußkabel versorgt die Steuerungseinrichtung mit elektrischer Energie. Die elektrische Steuerungseinrichtung besteht aus einem erhebliche Wärme erzeugenden Leistungsteil, der an einer zwischengeschalteten Querwand in dem gemeinsamen Gehäuse befestigt ist, um von dem Kühlstrom im Rotorraum des Antriebsmotors gekühlt zu werden, und aus einem vom Leistungsteil räumlich getrennten elektrischen Baustein, z. B. ein Kondensator, der an dem Bodenteil des gemeinsamen Gehäuses befestigt ist und von einer druckfesten Masse umgeben sein kann.

In der DE-C-36 42 727 ist eine weitere Tauchmotoreinheit beschrieben. Diese Einheit umfaßt ein zusammengesetztes Gehäuse, das aus einem ersten rohrförmigen Mantelteil, in dem sich der elektrische Antriebsmotor für die Kreiselpumpe befindet, und aus einem damit unlösbar verbundenen, zweiten Mantelteil mit Endboden, in dem sich die elektrische Steuerungseinrichtung für den Antriebsmotor befindet, besteht. Die elektrische Steuerungseinrichtung, z. B. ein Frequenzumrichter, ist mit dem Antriebsmotor über eine Steckverbindungskonstruktion elektrisch verbunden, um den Antriebsmotor zu steuern. Die Stromversorgung der elektrischen Steuerungseinrichtung erfolgt durch den Antriebsmotor. Die Steuerungseinrichtung, deren mögliche räumliche Anordnung in Fig. 1 dieser Druckschrift gezeigt ist, enthält in ihrem Gehäuse die übliche Elektronik, die in diesem Gehäuse mittels Feststoffen druckfest gekapselt ist.

Ein wesentlicher Nachteil dieser vorbekannten Tauchmotoreinheiten besteht darin, daß eine materialgerechte Entsorgung von nicht verwendbaren Tauchmotoreinheiten oder deren Teilen nicht wirtschaftlich durchgeführt werden kann. Es ist ein großer Arbeits- und Zeitaufwand dafür erforderlich, weil die Zerlegung der Einheiten sehr umständlich ist und somit hohe Kosten verursacht. Es findet in verhältnismäßig geringem Umfang nur eine Grobzerlegung, die zu dem mit zahlreichen Trennwerkzeugen durchgeführt werden muß, oder oft auch keine Zerlegung der Einheiten statt. Die anfallenden Grobteile bzw. gesamten Einheiten werden stattdessen in einer Schredderanlage auf das erforderliche Maß zerkleinert. Die zerkleinerte Masse wird nur teilweise wiederverwendet und der Rest zur Entlagerung auf eine Deponie gegeben. Dort können Umweltschäden entstehen, weil die Elektronikteile und die sie umgebenden Feststoffe und Vergußmassen Komponenten enthalten, die mit dem Erdreich oder anderen Stoffen der Deponie umweltschädigende Verbindungen eingehen können. Gesetzliche Vorschriften für die umweltschonende Entsorgung werden aus Kostengründen oft umgangen.

Der beschriebene Stand der Technik läßt desweiteren auch unter dem Gesichtspunkt der Vermeidung umweltschädigenden Abfalls nur bedingt eine wirtschaftliche Reparatur der Tauchmotoreinheiten zu. Häufig muß für eine Reparatur von Innenteilen der Einheiten das gemeinsame Gehäuse für den Motor und die Steuerungseinrichtung größtenteils und meistens selbst nicht mehr reparabel zerstört werden, so daß hierdurch zusätzliche Kosten durch ein neues gemeinsames Gehäuses entstehen. Abgesehen davon ist auch die Steuerungseinrichtung für den Motor im wesentlichen nicht kostengünstig zu reparieren, weil ihre Elektronikteile aus Stabilitätsgründen für das eigene Gehäuse, das selbst unreparierbar zerstört werden muß, mit Feststoffen und/oder Vergußmassen umgeben sind.

Weiterhin ist auch die Kühlung der elektrischen Steuerungseinrichtung für den Motor nicht zufriedenstellend, weil die von der elektrischen Steuerungseinrichtung und insbesondere von ihren stark wärmerzeugenden Bauteilen anfallende Wärme nur bei hoher Übertemperatur abgeführt werden kann.

Die Aufgabe der Erfindung besteht in der Verbesserung einer Tauchmotoreinheit der einleitend angeführten Art dahingehend, daß die Einheit unter dem Gesichtspunkt der Vermeidung einer Umweltbelastung wirtschaftlich entsorgt und repariert werden kann sowie hinsichtlich ihrer Kühlung und Formstabilität verbessert ist.

Die Lösung dieser Aufgabe ist in dem Patentanspruch 1 angeführt.

Durch die erfindungsgemäße Lösung kann die Tauchmotoreinheit wirtschaftlich entsorgt und repariert werden, denn die Moduleinheiten wie insbesondere der Antriebsmotor und die elektrische Steuerungseinrichtung können schnell mit minimalem Arbeitsaufwand demontiert und ihrerseits auf einfache Weise nach Materialsorten zerlegt und gegebenenfalls nach Auswechseln von schadhaften Bausteinen, Moduleinheiten oder anderen Teilen ebenso zeit- und kostensparend wieder zusammengesetzt werden. Auf diese Weise ist eine verbesserte Reparierbarkeit der Tauchmotoreinheit gewährleistet und bezüglich der Entsorgung brauchen nur diejenigen Teile entsorgt zu werden, die einen nicht behebbaren Schaden aufweisen. Es besteht die Möglichkeit, eine verbesserte Materialtrennung von schadhaften Teilen oder Modulen vorzusehen, so daß aus den ausgewechselten Materialien Alt-Rohmaterial wiedergewonnen werden kann, wodurch primäres Rohmaterial eingespart wird und die Deponie- und Umweltbelastung vermieden oder auf ein Minimum herabgesetzt wird. Im Falle eines schadhaften elektrischen Anschlußkabels entfällt ein zeitraubendes Ab- und Anmontieren des betreffenden Kabels, weil es auf einfache Weise mit der patronenförmigen Baueinheit verbunden ist. Desweiteren ist die Kühlung der elektrischen Steuerungseinrichtung der erfindungsgemäßen Tauchmotoreinheit verbessert, weil deren Verlustwärme von ihrem Gehäuse nun unmittelbar an das gemeinsame Gehäuse und von dort an die zu fördernde, die Einheit umgebende Flüssigkeit abgeführt wird. Schließlich ist durch die Tatsache, daß das Gehäuse der elektrischen Steuerungseinrichtung unmittelbar an dem gemeinsamen Gehäuse anliegt, auch die Stabilität der Tauchmotoreinheit im Bereich der elektrischen Steuerungseinrichtung verbessert, ohne daß das gemeinsame Gehäuse im Abschnitt der elektrischen Steuerungseinrichtung besonders stabil ausgeführt sein muß. Insbesondere ist die Tauchmotoreinheit dadurch biegesteifer und das gemeinsame Gehäuse kann durchgehend für die Moduleinheiten Antriebsmotor und elektrische Steuerungseinrichtung aus einem einzigen Rohrkörper mit relativ dünner Wanddicke bestehen. Außerdem ermöglicht die formstabile patronenförmige Baueinheit ein sicheres Transportieren der in ihr enthaltenen, empfindlichen Elektronikbauteile während der Fertigung der Tauchmotereinheit.

In vorteilhafter Ausgestaltung der erfindungsgemäßen Tauchmotoreinheit weist diese eine Endsteckeinheit auf, die bereits mit dem Anschlußkabel versehen ist. Dies ermöglicht ein sehr schnelles Auswechseln eines defekten Anschlußkabels.

In weiterer vorteilhafter Ausgestaltung der erfindungsgemäßen Tauchmotoreinheit umfaßt das Gehäuse der elektrischen Steuerungseinrichtung eine rohrförmige, wärmeleitende Mitteleinheit zur Aufnahme der üblichen elektrischen Steuerschaltmittel und zwei lösbar damit verbundene Endeinheiten mit jeweils einer axialen elektrischen Steckausbildung, wobei die Steckausbildungen beider Endeinheiten in komplementäre elektrische Steckausbildungen des Motors und der Endsteckeinheit eingreifen. Eine derartige Steuerungseinrichtung ist schnell mit angrenzenden Moduleinheiten zu verbinden bzw. davon zu trennen und desweiteren sind die innerhalb des Gehäuses der Steuerungseinrichtung vorgesehenen Steuerschaltmittel zwecks Austausch und/oder Entsorgung schnell zugänglich. Nach dem Austausch von schadhaften Bestandteilen kann das Gehäuse selbst wieder zusammengesetzt werden.

In weiterer Ausbildung umfaßt die eine Gehäuseumfangswand der elektrischen Steuerungseinrichtung bildende Mitteleinheit mindestens ein lösbar befestigtes, im Querschnitt halbkreisförmiges Schalenteil, das sich über die gesamte Länge der Mitteleinheit erstreckt und radial elastisch ausgebildet ist. Die radial elastische Ausbildung des Schalenteiles kann beispielsweise über längsverlaufende Sicken erreicht werden. Auf diese Weise wird eine radial auswärtswirkende Anlagekraft des Gehäuses der Steuerungseinrichtung an das gemeinsame Gehäuse erzielt, wenn die elektrische Steuerungseinrichtung in Form der patronenförmigen Baueinheit in das gemeinsame Gehäuse eingeschoben ist. Hierdurch können bei der Fertigung größere Toleranzen gewählt werden, trotzdem ist sichergestellt, daß das Gehäuse der Steuerungseinrichtung an dem gemeinsamen Gehäuse anliegt, weil das etwas zusammengedrückte Gehäuse der Steuerungseinrichtung nach dem Einschieben in das gemeinsame Gehäuse radial auswärts drückt. So wird auf einfache Weise gewährleistet, daß der Wärmetransport vom Gehäuse der Steuerungseinrichtung auf das gemeinsame Gehäuse optimal stattfindet.

In vorteilhafter Weiterbildung der Mitteleinheit umfaßt diese eine sich in ihrer Längsmitte erstreckende, demontierbare Platine, die mit den üblichen elektrischen Schaltmitteln versehen ist, und ferner sind Wärmeableitungsmittel vorgesehen, um die Verlustwärme von den elektronischen Teilen der Platine abzuführen. Die Wärmeableitungsmittel können aus elastisch verformbaren Kissen bestehen, die zwischen der Elektronik und dem Gehäuse der Mitteleinheit eingeklemmt sind. Die Wärmeableitungsmittel können auch aus einem Metallblock bestehen, dessen Außenbereich teilweise das Gehäuse der elektrischen Steuerungseinrichtung mitbildet. Somit können die Wärmeableitungsmittel sparsam eingesetzt werden, weil sie nur dort vorgesehen zu sein brauchen, wo Wärme abgeführt werden muß. Vergußmassen und schüttfähige Feststoffe zum Ausfüllen von Hohlräumen der patronenförmigen Baueinheit sind nicht mehr nötig.

Die Erfindung ist nachstehend anhand eines in der anliegenden Zeichnungen dargestellten Ausführungsbeispieles näher erläutert. Es zeigen
- Fig. 1: einen axialen Längsschnitt durch das Ausfühungsbeispiel,
- Fig. 2: eine auseinandergezogene Perspektivansicht auf eine Moduleinheit des Ausführungsbeispiels nach Fig. 1,
- Fig. 3: einen Längsschnitt durch eine weitere Moduleinheit des Ausführungsbeispiels nach Fig. 1,
- Fig. 4: eine Teildarstellung bei X in Fig. 1 in vergrößertem Maßstab.

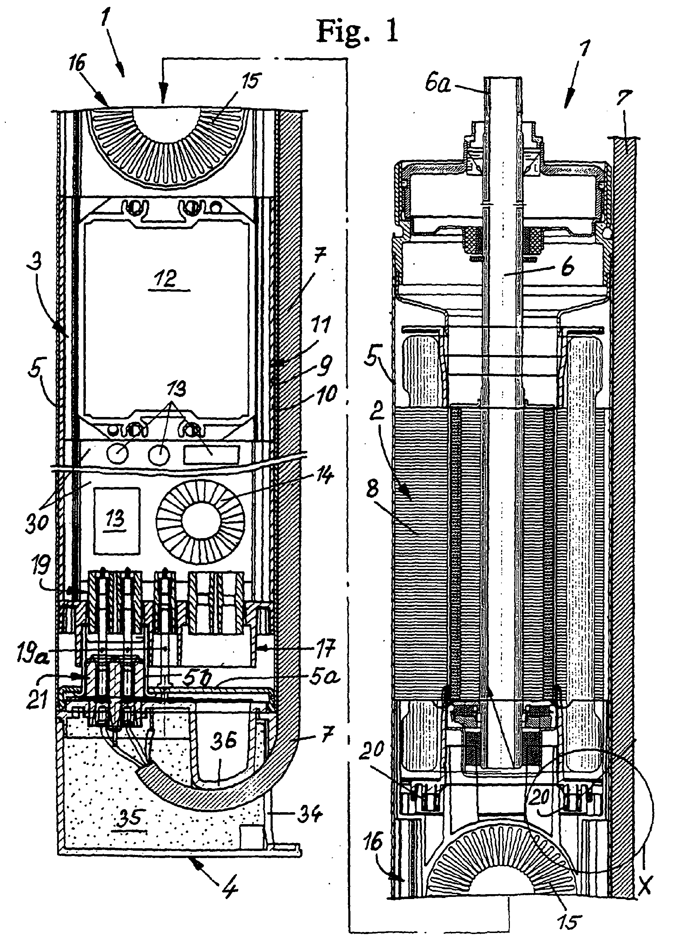

Die in Fig. 1 allgemein mit 1 bezeichnete Tauchmotoreinheit umfaßt, jeweils in Moduleinheiten, einen elektrischen Antriebsmotor 2, eine elektrische Steuerungseinrichtung 3 zur Einstellung der Drehzahl und/oder des Drehmomentes des Motors 2 und eine elektrische Endsteckeinheit 4, wobei der Motor und, die Steuerungseinrichtung in einem gemeinsamen, rohrförmigen und wärmeleitenden Gehäuse 5 untergebracht sind. Der Antriebsmotor treibt mit seiner Welle 6 eine Kreiselpumpe (nicht gezeigt) an, die mit dem herausragenden Ende 6a der Welle 6 in bekannter Weise gekuppelt ist. Die Endsteckeinheit 4 ist elektrisch mit einem ungeschirmten Anschlußkabel 7 fest verbunden, das an der Außenseite des gemeinsamen Gehäuses 5 verläuft und gegebenenfalls mit geeigneten Mitteln daran lösbar befestigt ist. Anstelle der Einheit 4 kann das Kabel 7 auch direkt mit der Einrichtung 3 elektrisch verbunden ist.

Der Antriebsmotor 2 ist beispielsweise ein Naßlaufmotor in Form eines Spaltrohrmotors, so daß der Rotor des Motors in bekannter Weise durch eine Flüssigkeit gekühlt wird. Der Stator 8 des Motors 2 wird dagegen nicht von der Motorflüssigkeit unmittelbar umströmt, sondern liegt mit dem Außenumfang seines Blechpaktes an dem gemeinsamen Gehäuse 5 an und wird somit in üblicher Weise von der Außenflüssigkeit, in welche die Tauchmotoreinheit eingetaucht ist, gekühlt. Weiterhin kann der Antriebsmotor 2 ein Wechselstrommotor sein, wobei dann die Steuerungseinrichtung 3 ein sogenannter Frequenzumrichter ist. Anderseits kann der Motor 2 auch ein elektronisch kommutierter Gleichstrommotor sein, wobei dann die Steuerungseinrichtung 3 mit der entsprechenden elektronischen Ausrüstung, die an sich bekannt ist, versehen ist, um den Motor hinsichtlich seiner Drehzahl und/oder seines Drehmomentes zu steuern. Ein solcher Motor ist in dem Ausführungsbeispiel nach Fig. 1 gezeigt.

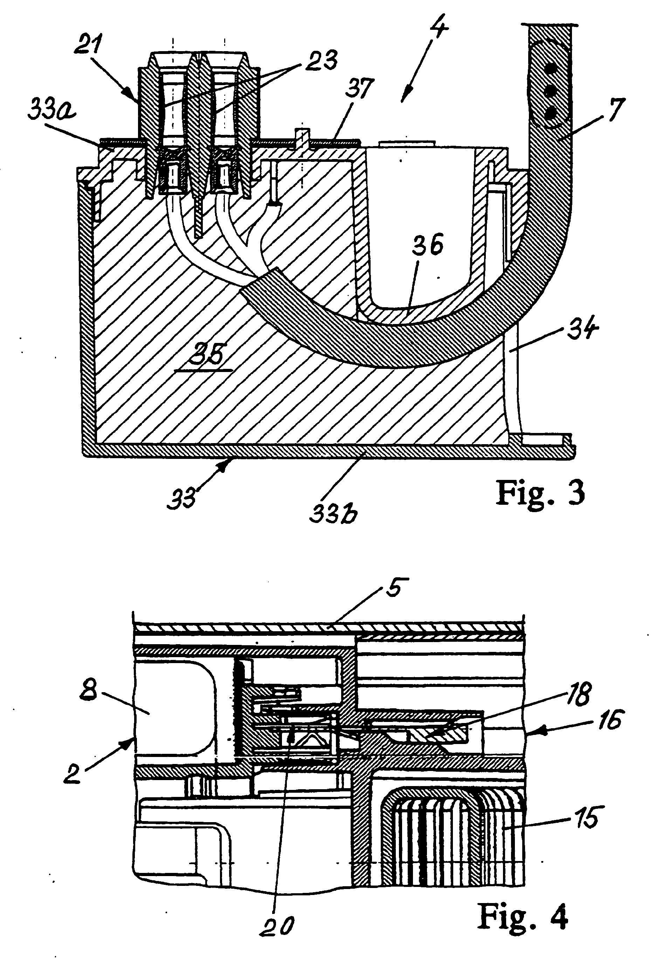

Die für diesen Motor verwendete Steuerungseinheit 3 ist als patronenförmige Baueinheit ausgebildet, die an ihrem einen Ende mit dem Antriebsmotor 2, wie es in Fig. 4. am besten zu erkennen ist, und an ihrem anderen Ende mit der Endsteckeinheit 4 elektrisch steckverbunden ist. Die patronenförmige Baueinheit weist einen Außendurchmesser auf, der dem Innendurchmesser, des gemeinsamen Gehäuses 5 entspricht. Nach ihrem axialen Einschieben in das gemeinsame Gehäuse kommt die patronenförmige Baueinheit mit ihrer Außenumfangsfläche 9 an der Innenumfangsfläche 10 des gemeinsamen Gehäuses 5 zur Anlage , so daß die Baueinheit in ihr erzeugte Verlustwärme direkt an das gemeinsame Gehäuse abführen kann.

Gemäß dem gezeigten Ausführungsbeispiel besteht das Gehäuse der elektrischen Steuerungseinrichtung 3 aus einer rohrförmigen, wärmeleitenden, mehrteiligen Mitteleinheit 11, die in ihrem Inneren die üblichen elektrischen und/oder elektronischen Steuerschaltmittel 12 - 15 aufweist, und aus zwei lösbar mit der Mitteleinheit 11 verbundenen Endeinheiten 16 und 17 mit jeweils einer axialen elektrischen Steckausbildung 18 bzw. 19. Um den elektrischen Kontakt der Steuerungseinrichtung 3 mit dem Antriebsmotor 2 und der Endsteckeinheit 4 auf der motorabgewandten Seite der Einrichtung 3 herzustellen, weisen sowohl der Motor 2 als auch die Endsteckeinheit 4 eine Steckausbildung 20 bzw. 21 auf, die jeweils zu den entsprechenden Steckausbildungen 18 bzw. 19 der Einrichtung 3, komplementär ausgebildet sind.

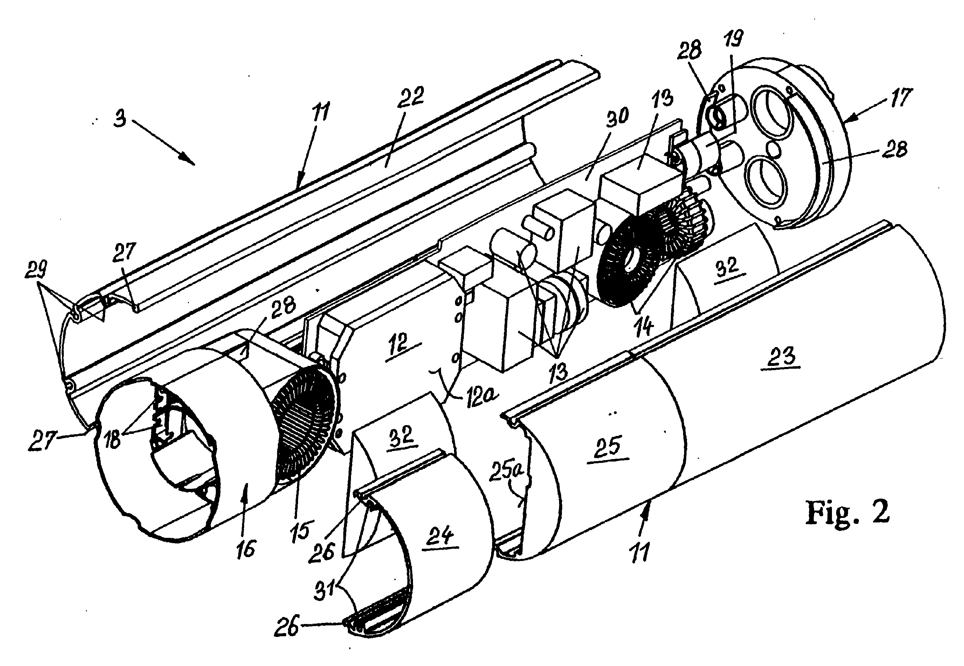

Im einzelnen besteht die Mitteleinheit 11 aus mehreren Teilen 22, 23, 24 und 25, die überwiegend als Schalenteile ausgebildet sind und einen halbkreisförmigen Querschnitt aufweisen. Wie aus Fig. 2 ersichtlich ist, erstreckt sich das Schalenteil 22 über die gesamte Länge der Mitteleinheit 11, während die andere Hälfte der Mitteleinheit 11 aus den beiden Schalenteilen 23 und 24 sowie aus wenigstens einem Metallblock 25 besteht, der außer seiner Funktion als Gehäusewand auch noch eine andere Funktion hat, wie noch klar wird. Die Gehäuseteile 22 bis 25 sind über Rastmittel 26, 27 in Form von Nut und darin eingreifende Wange lösbar miteinander verbunden. Ebenfalls sind die Endsteckeinheiten 16 und 17 mit der Mitteleinheit 11 lösbar miteinander verbunden, beispielsweise über Rippenteile 28, die mit den Schalenteilen 22, 23 und 24 reibschlüssig verbunden sind, oder ebenfalls über Rastmittel oder andere Verbindungsarten, wie es dem Fachmann ohne weiteres verständlich ist.

Die Mitteleinheit 11 ist desweiteren in radialer Richtung etwas elastisch ausgebildet, so daß die zur patronenförmigen Baueinheit montierte Steuerungseinrichtung 3 radial flexibel ist und radial einwärts etwas zusammengedrückt werden kann. Da der Außendurchmesser der Mitteleinheit geringfügig größer ist als der Innendurchmesser des gemeinsamen Gehäuses 5 vor dem Einschieben der Baueinheit in das gemeinsame Gehäuse, ist sichergestellt, daß nach dem Einschieben der Baueinheit die Außenumfangsfläche der Mitteleinheit mit einem gewissen Druck an der Innenumfangsfläche des gemeinsamen Gehäuses anliegt, um einen optimalen Wärmeübergang zu gewährleisten.

Um diese radiale Elastizität der Mitteleinheit 11 zu erreichen, kann so vorgegangen sein, daß das Schalenteil 22 auf seinem Umfang mehrere Sicken 29 aufweist, die sich über die Länge des Schalenteils 22 erstrecken, wie es Fig. 2 unten zeigt.

Die Teile 22 bis 25 bestehen aus wärmeleitenden Material, beispielsweise aus Aluminium.

Die Mitteleinheit weist ferner eine sich in ihrer Längsmitte erstrekkende, demontierbare Platine 30 auf, die im wesentlichen mit den üblichen elektrischen und/oder elektronischen Schalt- und Steuermitteln 12 bis 15 versehen ist. Um die Platine 30 in der Mitteleinheit 11 definiert zu halten, können beispielsweise die Teile 23, 24 und 25 mit zwei sich diametral gegenüberliegenden Nuten 31 versehen sein, in welche die bestückte Platine eingeschoben wird. Auf diese Weise ist die gesamte Platine schnell auswechselbar.

Um die von den Schalt- und Steuermitteln 12 bis 15 erzeugte Verlustwärme schnell und gezielt abführen zu können, sind im Inneren der Mitteleinheit 11 bzw. der patronenförmigen Baueinheit z. B. austauchbare Wärmeableitmittel vorgesehen. Diese können beispielsweise aus elastischen Kissen 32 in Segmentform bestehen, die einerseits auf der wärmeerzeugenden Elektronik der Platine oder anderen wärmeerzeugenden Teilen aufliegen und andererseits an der Innenumfangsfläche der Teile 23 und 24 anliegen, derart, daß die Kissen eingeklemmt sind. Zur sicheren Positionierung der elastischen Kissen können diese innenseitig an der Mitteleinheit angeklebt sein.

Die Wärmeableitmittel können aber auch wenigstens einen Metallblock umfassen, dessen Außenbereich teilweise das Gehäuse der Mitteleinheit 11 mitbildet. Beispielsweise kann das bereits erwähnte Bauteil 25 diese Funktion mitübernehmen, wie es aus Fig. 2 hervorgeht. Das elektronische Bauteil 12 der Platine erzeugt sehr viel Verlustwärme und liegt daher mit ihrer gesamten oberen Fläche 12a an der Innenfläche 25a des ein- oder mehrteiligen Metallblockes 25 an, so daß die angefangene Verlustwärme direkt von dem Block 25 an das gemeinsame Gehäuse 5 abgegeben wird.

Die voreinander beabstandete Lage der Wärmeheitmittel 25 und 32, insbesondere diejenige des etwa im Mittelbereich der Mitteleinheit 11 angeordneten Metallblocks 25, schützt den Antriebsmotor 2 in besonders wirksamer Weise vor der Verlustwärme der elektrischen und elektronischen Bauteile 12 - 15 und vor Wärmeauswirkungen von Schlamm, in den die Tauchmotoreinheit mit ihrem unteren Bereich während ihres Betriebes eingetaucht sein könnte.

Die Endsteckeinheit 4 umfaßt ein Gehäuse 33 aus einem Bodenteil 33a und einem Deckelteil 33b. Das Bodenteil ist mit der Steckausbildung 21 versehen, deren elektrisch leitende Buchsen mit den Adern des elektrischen Außenkabels 7 verbunden sind. Das Gehäuse 33 weist ferner einen seitlichen Eingang 34 für das Außenkabel auf. Das Gehäuse ist ferner mit einer Vergußmasse 35 ausgegossen, um das Kabel 7 in dem Gehäuse knickfrei positioniert festzulegen und nach außen flüssigkeitsdicht abzudichten.

Um die knickfreie Lagerung des Anschlußkabels 7 insbesondere während des Ausgießens des Gehäuses 33 mit der Vergußmasse 35 sicherzustellen, weist das Bodenteil 33a eine Stütze 36 auf, die auch einen gewünschten Umlenkradius des in das Gehäuse 33 eintretenden Kabels 7 gewährleistet.

Eine vorteilhafte Ausführungsform des ungeschirmten Anschlußkabels 7 der Endsteckeinheit 4 besteht darin, dieses Kabel als Flachkabel auszubilden, so daß es den Außendurchmesser der Tauchmotoreinheit nur geringfügig vergrößert.

Wie es Fig. 1 zeigt, ist das gemeinsame Gehäuse 5 an seinem motorabgewandten Ende mit einer Bodenwand 5a flüssigkeitsdicht verbunden, und diese Bodenwand weist eine Hülse 5b auf, in welche die Steckerstifte 19a der Steckausbildung 19 der elektrischen Steuerungseinrichtung 3 hineinragen. Die Endsteckeinheit 4 ist mit ihrer Endsteckausbildung 21 in die Hülse 5b eingeführt und stellt so den elektrischen Kontakt mit der Steckausbildung 19 der Einrichtung 3 her. Um auch im Bereich der Steckausbildung 21 bei eingesteckter Einheit 4 gegenüber der äußeren Flüssigkeit, in welche die Tauchmotoreinheit eingetaucht ist, eine gute Abdichtung zu erhalten, ist das Bodenteil 33a der Einheit 4 mit einem Abdichtungsmittel 37, beispielsweise in Form einer elastischen Platte, versehen.

## Patentansprüche

1. Tauchmotoreinheit für eine Kreiselpumpe, umfassend einen elektrischen Antriebsmotor (2), eine elektrische Steuerungseinrichtung (3) für die Einstellung der Drehzahl und/oder des Drehmomentes des Motors, ein gemeinsames, wärmeleitendes Gehäuse (5) für den Motor und die Steuerungseinrichtung sowie ein mit der ,Steuerungseinrichtung elektrisch verbundenes Anschlusskabel) (7), wobei diese Einrichtung (3) auf der pumpenabgewandten Endseite des Motors vorgesehen ist, **dadurch gekennzeichnet, dass** die elektrische Steuerungseinrichtung (3) als in das gemeinsame Gehäuse (5) einschiebbare, mit dem Antriebsmotor (2) elektrisch steckverbindbare, patronenförmige Baueinheit ausgebildet ist, dass das Gehäuse (11) der Steuerungseinrichtung (3) mit seiner Außenumfangsfläche (9) an der innenumfangsfläche (10) des gemeinsamen Gehäuses (5) derart anliegt, dass die patronenförmige Baueinheit in ihr erzeugte Verlustwärme direkt an das gemeinsame Gehäuse abführen kann, und dass die elektrische Steuerungseinrichtung an ihrem motorabgewandten Ende mit einem ungeschirmten Anschlusskabel (7) elektrisch verbunden ist.

2. Tauchmotoreinheit nach Anspruch 1, **dadurch gekennzeichnet, daß** das ungeschirmte Anschlußkabel (7) an eine Endsteckeinheit (4) angeschlossen ist, die ihrerseits mit der Steuerungseinrichtung (3) steckverbunden ist.

3. Tauchmotoreinheit nach Anspruch 1 oder 2, **dadurch gekennzeichnet, daß** das Gehäuse der elektrischen Steuerungseinrichtung eine rohrförmige, wärmeleitende Mitteleinheit (11) zur Aufnahme der üblichen elektrischen und/oder elektronischen Steuerschaltmittel (12 - 15) und zwei lösbar damit verbundene Endeinheiten (16, 17) mit jeweils einer axialen elektrischen Steckausbildung (18, 19) aufweist und daß die Steckausbildungen beider Endeinheiten in komplementäre elektrische Steckausbildungen (20, 21) des Motors (2) und der Endsteckeinheit (3) eingreifen.

4. Tauchmotoreinheit nach Anspruch 1, 2 oder 3, **dadurch gekennzeichnet, daß** die eine Gehäuseumfangswand der elektrischen Steuerungseinrichtung (3) bildende Mitteleinheit (11) mindestens ein, lösbar befestigtes Schalenteil(22) umfaßt, das sich über die gesamte Länge der Mitteleinheit erstreckt und radial elastisch ausgebildet ist, um eine radial auswärts wirkende Anlagekraft der Mitteleinheit an das gemeinsame Gehäuse (5) bei darin eingeschobener, patronenförmiger Baueinheit zu erzielen.

5. Tauchmotoreinheit nach Anspruch 4, **dadurch gekennzeichnet, daß** die radial elastische Ausbildung des Schalenteils (22) aus sich über dessen Länge ertreckenden Sicken besteht.

6. Tauchmotoreinheit nach Anspruch 3 oder 4, **dadurch gekennzeichnet, daß** die Mitteleinheit (11) eine sich in ihrer Längsmitte erstreckende, demontierbare Platine (30) aufweist, die mit den üblichen elektrischen und/oder elektronischen Steuerschaltmitteln (12 - 14) versehen ist, und daß austauschbare Wärmeableitmittel (32, 25) vorgesehen sind, um die Verlustwärme von den wärmeerzeugenden Teilen der Platine zu der Mitteleinheit (11) abzuführen.

7. Tauchmotoreinheit nach Anspruch 6, **dadurch gekennzeichnet, daß** die Wärmeableitmittel aus elastischen, auf den wärmeerzeugenden Teilen der Platine (30) aufliegenden Kissen (32) bestehen, die zwischen diesen Teilen und der Mitteleinheit (11) eingeklemmt sind.

8. Tauchmotoreinheit nach Anspruch 7, **dadurch gekennzeichnet, daß** die Kissen an der Mitteleinheit (11) der Steuerungseinrichtung (3) angeklebt sind.

9. Tauchmoto einheit nach Anspruch 6, **dadurch gekennzeichnet, daß** die Wärmeableitmittel wenigstens einen , Metallblock (25) umfassen, dessen Außenbereichsabschnitt teilweise das Gehäuse der Mitteleinheit (11) mitbildet.

10. Tauchmotoreinheit nach einem der Ansprüche 2 bis 9, **dadurch gekennzeichnet, daß** die Endsteckeinheit (4) ein Gehäuse (33) mit seitlichem Eingang (34) für das Anschlußkabel (7) und mit einer Vergußmasse (35) in seinem Inneren zur knickfreien Positionierung des Kabels darin und zur flüssigkeitsdichten Abdichtung des Kabels in der Endsteckeinheit umfaßt.

11. Tauchmotoreinheit nach Anspruch 10, **dadurch gekennzeichnet, daß** im Inneren des Gehäuses (33) der Endsteckeinheit (4) eine Stütze (36) für die knickfreie Umlenkung des Anschlußkabels (7) vorgesehen ist.

12. Tauchmotoreinheit nach einem der Ansprüche 1 bis 11, **dadurch gekennzeichnet, daß** das elektrische Anschlußkabel (7) ein Flachkabel ist.

## Claims

1. A submersible motor unit for a centrifugal pump, comprising an electrical drive motor (2), electrical control means (3) for setting the rotary speed and/or the torque of the motor, a common heat-conducting housing (5) for the motor and the control means as well as a connection cable (7) electrically connected to the control means, wherein this means (3) is provided on the end-side of the motor, said end-side being away from the pump, **characterised in that** the electrical control means (3) is formed as a cartridge-like constructional unit which can be inserted into the common housing (5) and which can be electrically plug-connected to the drive motor (2), that the housing (11) of the control means (3) bears with its outer peripheral surface (9) on the inner peripheral surface (10) of the common housing (5) in a manner such that the cartridge-like construction unit may lead away waste heat produced in it, directly to the common housing and that the electrical control means at its end distant to the motor is electrically connected to an unshielded connection cable (7).

2. A submersible motor unit according to claim 1, **characterised in that** the unshielded connection cable (7) is connected to an endplug unit (4) which for its part is plug-connected to the control means (3).

3. A submersible motor unit according to claim 1 or 2, **characterised in that** the housing of the electrical control means comprises a tubular, heat-conducting middle unit (11) for receiving the usual electrical and/or electronic control circuit means (12 - 15), and two end units (16, 17) releasably connected thereto with in each case an axial electrical plug formation (18, 19) and that the plug formations of both end units engage into complementary electrical plug formations (20, 21) of the motor (2) and of the plug unit (3).

4. A submersible motor unit according to claim 1, 2 or 3, **characterised in that** the middle unit (11), forming a housing peripheral wall of the electrical control means (3), comprises at least one releasably fastened shell part (22) which extends over the complete length of the middle unit and is formed radially elastically, in order to achieve a radially outwardly acting bearing force of the middle unit on the common housing (5), given a cartridge-like constructional unit inserted therein.

5. A submersible motor unit according to claim 4, **characterised in that** the radial elastic formation of the shell part (22) consists of beads extending over the length of the shell part (22).

6. A submersible motor unit according to claim 3 or 4, **characterised in that** the middle unit (11) comprises a dismountable circuit board (30) which extends in its longitudinal centre, is provided with the usual electrical and/or electronic control circuit means (12 - 14) and that exchangeable heat dissipating means (32, 25) are provided, in order to lead away the waste heat from the heat producing parts of the circuit board, to the middle unit (11).

7. A submersible motor unit according to claim 6, **characterised in that** the heat dissipating means consist of elastic cushions (32) which lie on the heat producing parts of the circuit board (30) and which are clamped between these parts and the middle unit (11).

8. A submersible motor unit according to claim 7, **characterised in that** the cushion is bonded to the middle unit (11) of the control means (3).

9. A submersible motor unit according to claim 6, **characterised in that** the heat dissipating means comprise at least one metal block (25), whose outer region section partly co-forms the housing of the middle unit (11).

10. A submersible motor unit according to one of the claims 2 to 9, **characterised in that** the end plug unit (4) comprises a housing (33) with a lateral entry (34) for the connection cable (7) and with a cast mass (35) in its inside for the kink-free positioning of the cable therein and for the fluid-tight sealing of the cable in the end plug unit.

11. A submersible motor unit according to claim 10, **characterised in that** a support (36) for the kink-free deflection of the connection cable (7), is provided in the inside of the housing (33) of the end plug unit (4).

12. A submersible motor unit according to one of the claims 1 to 11, **characterised in that** the electrical connection cable (7) is a flat cable.

## Revendications

1. Unité moteur submersible pour une pompe centrifuge, comprenant un moteur d'entraînement électrique (2), un dispositif de commande électrique (3) pour le réglage de la vitesse et/ou du couple de rotation du moteur, un carter (5) conducteur de chaleur, commun au moteur et au dispositif de commande ainsi qu'un câble de raccordement (7) raccordé électriquement au dispositif de commande, ce dispositif (3) étant prévu sur le côté d'extrémité du moteur opposé à la pompe, **caractérisé en ce que** le dispositif de commande électrique (3) est conçu en tant qu'ensemble en forme de cartouche apte à être inséré dans le carter commun (5) et à être raccordé électriquement par enfichage au moteur d'entraînement (2), **en ce que** l'enveloppe (11) du dispositif de commande (3) repose par sa surface périphérique extérieure (9) sur la surface périphérique intérieure (10) du carter commun (5) de telle sorte que l'ensemble en forme de cartouche peut évacuer la chaleur perdue générée à l'intérieur de celui-ci directement vers le carter commun et **en ce que** le dispositif de commande électrique est relié électriquement, au niveau de son extrémité opposée au moteur, à un câble de raccordement non blindé (7).

2. Unité moteur submersible selon la revendication 1, **caractérisée en ce que** le câble de raccordement non blindé (7) est raccordé à une unité enfichable d'extrémité (4), elle-même raccordée par enfichage au dispositif de commande (3).

3. Unité moteur submersible selon la revendication 1 ou 2, **caractérisée en ce que** l'enveloppe du dispositif de commande électrique présente une unité centrale (11) tubulaire conductrice de chaleur, destinée à recevoir les moyens commutateurs de commande électriques et/ou électroniques usuels (12 - 15), et deux unités d'extrémité (16, 17) qui y sont reliées de façon amovible et sont dotées respectivement d'une configuration enfichable (18, 19) électrique axiale, et **en ce que** les configurations enfichables des deux unités d'extrémité viennent s'emboîter dans des configurations enfichables électriques (20, 21) complémentaires du moteur (2) et de l'unité enfichable d'extrémité (3).

4. Unité moteur submersible selon la revendication 1, 2 ou 3, **caractérisée en ce que** l'unité centrale (11) formant une paroi périphérique d'enveloppe du dispositif de commande électrique (3) comprend au moins une partie en coquille (22) fixée de façon amovible, qui s'étend sur toute la longueur de l'unité centrale et est réalisée de manière radialement élastique pour créer une force d'appui, agissant radialement vers l'extérieur, de l'unité centrale sur le carter commun (5) lorsque l'ensemble en forme de cartouche y est inséré.

5. Unité moteur submersible selon la revendication 4, **caractérisée en ce que** la configuration radialement élastique de la partie en coquille (22) est constituée de moulures s'étendant sur sa longueur.

6. Unité moteur submersible selon la revendication 3 ou 4, **caractérisée en ce que** l'unité centrale (11) présente une platine (30) démontable s'étendant le long de son axe longitudinal, dotée des moyens commutateurs de commande électriques et/ou électroniques usuels (12 - 15), et **en ce que** des moyens de dissipation de chaleur (32, 25) interchangeables sont prévus pour évacuer la chaleur perdue depuis les parties de la platine générant de la chaleur vers l'unité centrale (11).

7. Unité moteur submersible selon la revendication 6, **caractérisée en ce que** les moyens de dissipation de chaleur sont constitués de coussins (32) élastiques reposant sur les parties de la platine (30) générant de la chaleur et qui sont coincées entre ces parties et l'unité centrale (11).

8. Unité moteur submersible selon la revendication 7, **caractérisée en ce que** les coussins sont collés sur l'unité centrale (11) du dispositif de commande (3).

9. Unité moteur submersible selon la revendication 6, **caractérisée en ce que** les moyens de dissipation de chaleur comprennent au moins un bloc métallique (25) dont une partie de région extérieure forme partiellement l'enveloppe de l'unité centrale (11).

10. Unité moteur submersible selon l'une des revendications 2 à 9, **caractérisée en ce que** l'unité enfichable d'extrémité (4) comprend un boîtier (33) pourvu d'une entrée latérale (34) pour le câble de raccordement (7) et d'une masse de scellement (35) prévue à l'intérieur pour le positionnement sans angle aigu du câble et pour l'étanchéisation du câble vis-à-vis de liquides dans l'unité enfichable d'extrémité.

11. Unité moteur submersible selon la revendication 10, **caractérisée en ce qu'**est prévu à l'intérieur du boîtier (33) de l'unité enfichable d'extrémité (4) un support (36) permettant une déviation sans angle aigu du câble de raccordement (7).

12. Unité moteur submersible selon l'une des revendications 1 à 11, **caractérisée en ce que** le câble de raccordement électrique (7) est un câble plat.
